# EUROPÄISCHE PATENTSCHRIFT

(11) **EP 0 640 777 B1**
(45) Veröffentlichungstag und Bekanntmachung des Hinweises auf die Patenterteilung: **05.03.1997**
(21) Anmeldenummer: 94112333.3
(22) Anmeldetag: 08.08.1994
(51) Int. Cl.: F16H 25/20

(54) **Spielarme Mutter für Schraubgetriebe**
Low-backlash nut for screw transmission
Ecrou à faible jeu pour transmission à vis

(30) Priorität: 24.08.1993 CH 2512/93
(43) Veröffentlichungstag der Anmeldung: 01.03.1995
(73) Patentinhaber: Eichenberger Gewinde AG, CH-5736 Burg (CH)
(72) Erfinder: Husistein, Kurt, CH-6221 Rickenbach (CH)
(74) Vertreter: Morva, Tibor

(56) Entgegenhaltungen:
- DE-A- 4 136 988
- DE-C- 171 252
- US-A- 3 124 969
- US-A- 3 857 547
- PATENT ABSTRACTS OF JAPAN vol. 13, no. 340 (M-857) 31. Juli 1989 & JP-A-01 116 369 (MITSUBISHI ELECTRIC CORP) 9. Mai 1989

## Beschreibung

Die vorliegende Erfindung betrifft eine totgangarme Wandermutter für die Gewindespindel eines Schraubgetriebes mit den im Oberbegriff von Anspruch 1 aufgeführten Merkmalen.

Aus der US-A-3124969 ist eine totgangarme Wandermutter der eingangs erwähnten Art bekannt. Diese Wandermutter besteht aus einem Kugelumlauf-Mutterkörper und aus einem Kugelumlauf-Hilfmutterkörper, die unter Federspannung längsverschiebbar aber verdreungssicher miteinander gekoppelt sind. Die beiden federbelasteten Mutterkörper stützen sich auf dem Gewinde einer gemeinsamen Gewindespindel ab. Um die längsverschiebbare Koppelung zwischen dem Mutter- und dem Hilfsmutterkörper zu verwirklichen, sind sowohl der Mutterkörper als auch der Hilsmutterkörper an ihren einander zugekehrten Seiten mit mehreren gegenüberliegenden, axparallelen Sacklöchern versehen. In die gegenüberliegenden Sacklöcher sind Stifte eingelegt, die eine gegenseitige Verdrehung von Mutterkörper und Hilsmutterkörper verhindern. Jeder Stift ist durch eine in einem von zwei gegenüberliegenden Sacklöchern eingelegte Feder vorgespannt. Die zu jedem Stift zugeordneten Feder spannen den Mutterkörper und den Hilfsmutterkörper voneinander, wodurch das Längsspiel der gesamten Wandermutter klein gehalten werden kann. Die Wandermutter kann nur mit einem verhältnismässig grossem Aufwand montiert werden, weil in einer Stufe die Feder und in einer anderen Stufe die Stifte in die Sacklöcher eingebracht und erst danach der Mutterkörper und der Hilfsmutterkörper zusammengefügt werden können.

Aus der DE-A1-4010111 ist eine weitere totgangarme Wandermutter bekannt. Diese Wandermutter besteht aus einem Mutterkörper und aus einem Hilfsmutterkörper, die unter Federspannung längsverschiebbar aber verdrehungssicher miteinander gekoppelt sind. Der Hilfsmutterkörper weist einen in den Mutterkörper einschiebbaren Abschnitt auf. Zwei radial vorstehende Rippen des Hilfsmutterkörpers greifen dabei in nach innen gerichtete Nuten des Mutterkörpers ein, wodurch eine gegenseitige Verdrehung zwischen diesen Teilen verhindert wird. Die Enden der radial vorstehenden Rippen des Hilfsmutterkörpers sind mit federnden Haken versehen, die bei zusammengebauter Wandermutter in eine gegenseitige Längsverschiebung zulassende Ausnehmungen des Mutterkörpers eingreifen. Die von der Gewindespindel entfernte Wandermutter ist durch diese Schnappverbindung gegen Auseinanderfallen gesichert. Zwischen dem Mutterkörper und dem Hilfsmutterkörper ist eine an diesen beiden Teilen abgestützte Feder vorhanden. Diese Feder drückt den Mutterkörper und den Hilfsmutterkörper auseinander und presst ihre Innengewinde an einander zugekehrte Flanken des Gewindes einer für die Führung der Wandermutter vorgesehenen Gewindespindel. Durch die Anpressung der Innengewinden des Mutterkörpers und des Hilfsmutterkörpers an die einander zugekehrten Gewindeflanken der Gewindespindel wird der bei Drehrichtungsänderungen zwischen Wandermutter und Gewindespindel auftretende Totgang vermindert, so dass das so ausgebildete Schraubgetriebe für höchste Präzisionsansprüche geeignet ist. Diese bekannte Wandermutter ist aus verhältnismässig komplizierten und somit auch teueren Teilen zusammengebaut. Eine Aenderung der Vorspannung zwischen dem Mutterkörper und dem Hilfsmutterkörper ist nur durch Ersetzen der dazwischenliegenden Feder durch eine andere mit einer anderen Federcharakteristik möglich. Wenn die durch die Federcharakteristik gegebene Vorspannkraft zwischen dem Mutterkörper und dem Hilfsmutterkörper zu hoch gewählt wird, kann es bei der Verriegelung gegen eine gegenseitige Verdrehung zwischen Mutterkörper und Hilfsmutterkörper zu mechanischen Ueberbeanspruchungen kommen, was nur durch Entfernen der gesamten Wandermutter und Ersetzen durch eine andere behebbar ist.

In der US-A-3857547 ist eine weitere Wandermutter mit einem Mutterkörper und mit einem Hilfsmutterkörper beschrieben. Bei dieser Anordnung sind sowohl der Mutterkörper als auch der Hilfsmutterkörper in einer die beiden umgebenden, zweiteiligen Hülse über Kugellager verdrehbar gelagert. Der Hilfsmutterkörper trägt mehrere axparallel ausgerichtete, darin festgehaltene Stifte, die in Bohrungen des Mutterkörpers längsverschiebbar geführt sind, um eine gegenseitige Verdrehung zwischen dem Mutterkörper und dem Hilfsmutterkörper zu verhindern. Bei der Montage der Anordnung wird zwischen dem mit der Hülse in Achsrichtung der Gewindespindel fest verbundenen Kugellager und dem Hilfsmutterkörper eine Feder eingesetzt, die den Hilfsmutterkörper gegen die Hülse und somit auch gegen den Mutterkörper vorspannt. Die voneinander vorgespannten Mutterkörper und Hilfsmutterkörper stützen sich an der Hülse und nicht an den Flanken der Gewinde der gemeinsamen Gewindespindel federnd ab. Bei dieser Anordnung werden deshalb allfällige Abnützungen an den Gewindeteilen durch die Feder nicht automatisch ausgeglichen. Diese Wandermutter muss aus diesem Grunde immer wieder nachgespannt werden.

Die japanische Druckschrift JP-A-01116369 beschreibt eine weitere Wandermutter mit Mutterkörper und Hilfsmutterkörper. Der Hilfsmutterkörper ist mit festen, axparallelen Stiften ausgerüstet, die in gegenüberliegenden Bohrungen im Mutterkörper längsverschiebbar geführt sind. Der Mutterkörper ist ausserdem mit weiteren, axparallel ausgerichteten Bohrungen versehen, wobei in jede offene Bohrung eine sich am Hilfsmutterkörper abstützende Feder eingelegt ist. Die Montage dieser Wandermutter muss auch in zwei Stufen, in zwei getrennten Arbeitsgängen mit zwei getrennten Vorrichtungen erfolgen. Die eine Vorrichtung ist für die Montage der Stifte im Hilfsmutterkörper und eine andere für das Einsetzen der Feder in die Bohrungen des Mutterkörpers erforderlich.

In der deutschen Patentschrift DE-C-171252 ist eine dreiteilige Wandermutter mit mittels Federn voneinandergespannten Mutter- und Hilfsmutterkörpern beschrieben. Diese Wandermutter besteht aus zu vielen Teilen und ist kompliziert.

Aufgabe der vorliegenden Erfindung ist es, eine totgangarme Wandermutter der eingangs erwähnten Art zu entwickeln, bei welcher die federnde Vorspannung und die Verdrehungssicherung zwischen dem Mutterkörper und dem Hilfsmutterkörper mit einfachen, kostengünstigen und einfach montierbaren Mitteln verwirklicht werden kann.

Die gestellte Aufgabe ist dadurch gelöst, dass der Verbindungskörper mindestens teilweise rohrförmig ist und mindestens im rohrförmigen Teil des Verbindungskörpers eine Feder liegt. Die die gegenseitige Verdrehung zwischen dem Mutterkörper und dem Hilfsmutterkörper verhindernden, mindestens teilweise rohrförmigen Verbindungskörper können einfach in die einander gegenüberliegenden Sacklöcher des Mutterkörpers und des Hilfsmutterkörpers eingesetzt werden. Die Anzahl der einzusetzenden Verbindungskörper hängt von der vorhandenen Scherkraft ab. Bei der richtigen Anzahl der Verbindungskörper sind mechanische Ueberbeanspruchungen der einzelnen Verbindungskörper vermeidbar. Nachdem die den Mutterkörper und den Hilfsmutterkörper voneinanderspannenden Feder mindestens teilweise in den Verbindungskörpern liegen, sind die Verbindungskörper einfach ausgebildet und einfach montierbar.

Der Verbindungskörper kann mindestens eine an mindestens einem Ende aus dem Verbindungskörper vorstehende Feder aufnehmen. Dieser Verbindungskörper ist einfach und kostengünstig.

Dem Verbindungskörper kann dabei mindestens an einem Ende ein darin geführter, unter der Wirkung mindestens einer im Verbindungskörper abgestützten Feder stehender Stift vorstehen. Dieser Verbindungskörper ist abgeschlossen und kann einfach gelagert und montiert werden. Der Stift kann gegen Herausfallen in der entspannten Stellung der Feder durch einen im Verbindungskörper vorhandenen Anschlag gesichert sein.

Der Verbindungskörper kann aussen mindestens eine den Mutterkörper und den Hilfsmutterkörper voneinanderspannende, zusätzliche Feder tragen. Bei dieser Anordnung kann aussen um den Verbindungskörper die zusätzliche Feder zur Erhöhung der Vorspannung und/oder zur hubabhängigen Veränderung der gesamthaft wirksamen Federcharakteristik benützt werden.

Im folgenden werden anhand der beiliegenden Zeichnungen Ausführungsbeispiele der Erfindung näher beschrieben. Es zeigen:
- Fig.1: eine totgangarme Wandermutter auf einer Gewindespindel mit einem Mutterkörper und mit einem Hilfsmutterkörper im Schnitt,
- Fig.2: den Mutterkörper allein mit der Gewindespindel in Achsrichtung der Gewindespindel gesehen,
- Fig.3 und Fig.4: zwei verschiedene Ausführungsvarianten eines zwischen dem Mutterkörper und dem Hilfsmutterkörper einsetzbaren Verbindungskörpers.

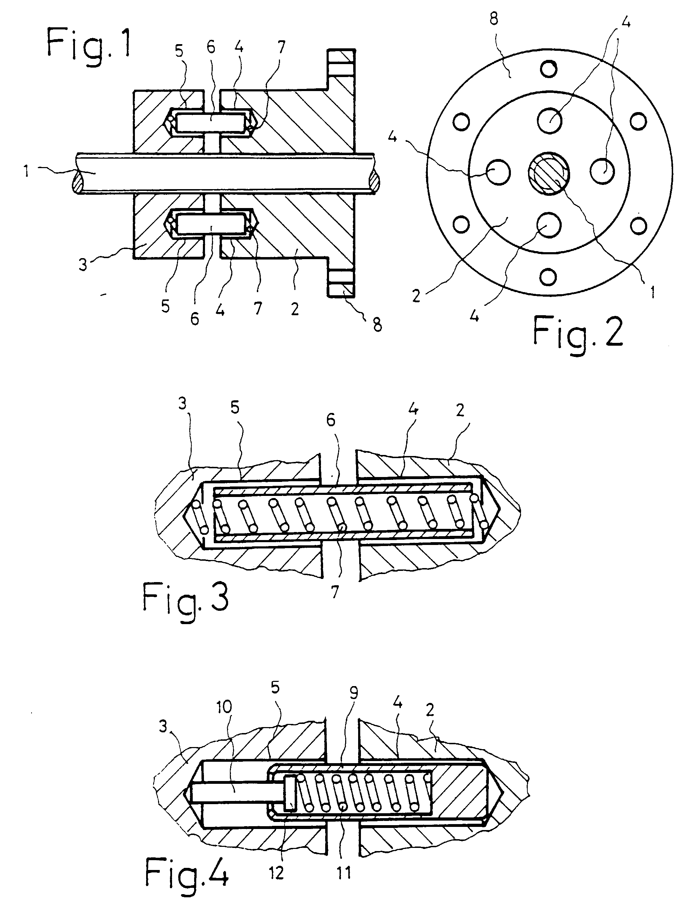

Aus der Fig.1 ist eine auf einer Gewindespindel 1 eines Schraubgetriebes gelagerte, zweiteilige, totgangarme Wandermutter ersichtlich. Die Wandermutter ist aus einem Mutterkörper 2 und aus einem Hilfsmutterkörper 3 zusammengesetzt, die mit ihren Innengewinden mit dem Gewinde der Gewindespindel 1 direkt oder im Falle eines Kugelumlauf-Schraubgetriebes indirekt zusammenwirken. Der Mutterkörper 2 ist an seinem dem Hilfsmutterkörper 3 zugekehrten Teil mit vier Sacklöchern 4 versehen, wie es in Fig.2 in der Seitenansicht des alleinstehenden Mutterkörpers 2 auch gezeigt ist. Am dem Mutterkörper 2 zugekehrten Teil des Hilfsmutterkörpers 3 sind ebenfalls vier den Sacklöchern 4 des Mutterkörpers 2 gegenüberliegende Sacklöcher 5 angebracht. In den Figuren 3 bis 7 sind unmittelbar um die Sacklöcher 4 und 5 nur kleine Teile des Mutterkörpers 2 und des Hilfsmutterkörpers 3 angedeutet. In je zwei gegenüberliegende Sacklöcher 4 und 5 ist je ein Verbindungskörper 6 eingelegt. Dieser starre Verbindungskörper 6 verhindert eine relative gegenseitige Verdrehung zwischen dem Mutterkörper 2 und dem Hilfsmutterkörper 3. Der in Fig.1 gezeigte Verbindungskörper 6 ist in Fig.3 im Schnitt vergrössert dargestellt. Der Verbindungskörper 6 ist rohrförmig und in den beiden gegenüberliegenden Sacklöchern 4 und 5 in Längsrichtung der Gewindespindel 1 verschiebbar geführt. Im Inneren des rohrförmigen Verbindungskörpers 6 ist eine Feder 7 untergebracht, deren beide Enden aus dem rohrförmigen Verbindungskörper 6 vorstehen und sich an den Böden der Sacklöcher 4 und 5 abstützen. Diese Feder 7 spannt den Mutterkörper 2 und den Hilfsmutterkörper 3 voneinander.

Sowohl der Mutterkörper 2 als auch der Hilfsmutterkörper 3 sind einfache, wirtschaftlich vorteilhafte, nur mit je einem Innengewinde und mit je vier Sacklöchern 4 und 5 versehene, ringförmige Körper, die aus einem Metall oder aus einem geeigneten Kunststoff bestehen. Der Mutterkörper 2 ist mit einem Flansch 8 versehen, der als Getriebeanschluss dient. Die Innengewinde im Mutterkörper 2 und im Hilfsmutterkörper 3 sind jeweils dem Gewinde der Gewindespindel 1 oder des Uebertragungsmittels des Gewindetriebes angepasst. Die am häufigsten verwendeten Innengewinde sind für Gewindetriebe mit einer mehrgängigen Steilgewindespindel oder mit einer eingängigen Trapezgewindespindel, oder für Kugelumlauf-Schraubgetriebe vorgesehen.

Die zu den Verbindungskörpern 6 zugeordneten Feder 7 drücken den Mutterkörper 2 und den Hilfsmutterkörper 3 voneinander weg und pressen ihre Innengewinde an die einander zugekehrten Flanken des des Gewindes der Gewindespindel 1. Durch die Anpressung der Innengewinden des Mutterkörpers 2 und des Hilfsmutterkörpers 3 an die einander zugekehrten Gewindeflanken der Gewindespindel 1 tritt bei einer relativen Drehrichtungsänderung zwischen der Wandermutter und der Gewindespindel 1 praktisch kein Totgang auf. Deshalb erfüllt dieses Schraubgetriebe höchste Präzisionsansprüche. Die den Mutterkörper 2 und den Hilfsmutterkörper 3 voneinander wegdrückende Vorspannkraft kann wie bekannt durch die Wahl der Charakteristik der Feder 7 oder aber bei den hier beschriebenen Anordnungen auch durch die Anzahl der eingesetzten Feder 7 eingestellt werden. Es müssen nicht in alle vorhandenen gegenüberliegenden Sacklöchern 4, 5 Verbindungskörper 6 und Feder 7 eingesetzt sein. Man kann auch bei einigen Verbindungskörpern 6 die Feder 7 weglassen, wenn es zweckmässig ist. Eine weitere Möglichkeit für die Einstellung der Vorspannung zwischen dem Mutterkörper 2 und dem Hilfsmutterkörper 3 bietet sich in der Aenderung der Distanz zwischen diesen beiden Teilen an. Die Distanz zwischen dem Mutterkörper 2 und dem Hilfsmutterkörper 3 kann durch Veränderung der gegenseitigen Winkellage zwischen diesen Teilen eingestellt werden, wobei die Sacklöcher 4 im Mutterkörper 2 in Bezug auf die Sacklöcher 5 im Hilfsmutterkörper 3 durch eine relative Drehbewegung versetzt und durch Verbindungskörper 6 neu verbunden werden. Auf dieser Weise kann die Vorspannung zwischen dem Mutterkörper 2 und dem Hilfsmutterkörper 3 in einem verhältnismässig grossem Bereich mit den bestehenden Bauteilen der Wandermutter einfach geändert werden. Die mechanische Ueberbeanspruchung der einzelnen Verbindungskörper 6 durch Scherkräfte kann dadurch vermieden werden, dass man die Anzahl der eingesetzten Verbindungskörper den vorhandenen Scherkräften anpasst.

Fig.4 zeigt einen anderen Verbindungskörper 9 mit einem im einseitig offenen rohrförmigen Teil des Verbindungskörpers 9 geführten Stift 10. Der Stift ist durch die im Verbindungskörper 9 abgestützte Feder 11 an den Boden des Sackloches 5 im Hilfsmutterkörper 3 gepresst. Das andere auch unter der Wirkung der Feder 11 stehende verschlossene Ende des Verbindungskörpers 9 stützt sich am Boden des Sackloches 4 im Mutterkörper 2 ab. Die Mündung des rohrförmigen Teiles des Verbindungskörpers 9 ist eingebördelt, um für den im rohrförmigen Teil des Verbindungsstückes 9 verschiebbaren Ansatzes 12 des Stiftes 10 einen Anschlag zu bilden und so den Stift 10 bei entspannter Feder 11 gegen Herausfallen zu sichern.

Aussen um den Verbindungskörper 6 und/oder 9 kann eine zweite den Mutterkörper 2 und den Hilfsmutterkörper 3 voneinanderspannende Feder angelegt sein. Durch diese zweite, zusätzliche Feder kann die durch die erste Feder bestimmte Vorspannung zwischen dem Mutterkörper 2 und dem Hilfsmutterkörper 3 erhöht werden. Diese beiden parallelgeschalteten Feder können auch unterschiedliche Federcharakteristiken aufweisen, so dass durch Aenderung der Distanz zwischen dem Mutterkörper 2 und dem Hilfsmutterkörper 3 eine nichtlineare Aenderung der Vorspannung möglich ist.

## Patentansprüche

1. Totgangarme Wandermutter eines Schraubgetriebes mit einer Gewindespindel (1) und mit einem für einen Getriebeanschluß vorgesehenen Mutterkörper (2) sowie mit einem mit dem Mutterkörper drehfest und in Längsrichtung der Gewindespindel (1) längsverschiebbar gekoppelten Hilfsmutterkörper (3),
- wobei der Mutterkörper (2) und der Hilfsmutterkörper (3) in Längsrichtung der Gewindespindel (1) durch mindestens eine Feder (7, 11) voneinander weg vorgespannt und mit ihren Innengewinden an der Gewindespindel (1) abgestützt sind,
- wobei der Mutterkörper (2) und der Hilfsmutterkörper (3) an ihren einander zugekehrten Teilen mit mehreren, gegenüberliegenden Sacklöchern (4, 5) versehen sind,
- wobei mindestens zwei gegenüberliegende Sacklöcher (4, 5) durch einen starren, in mindestens einem von den beiden gegenüberliegenden Sacklöchern (4, 5) in Längsrichtung der Gewindespindel (1) verschiebbar geführten, eine relative gegenseitige Verdrehung zwischen dem Mutterkörper (2) und dem Hilfsmutterkörper (3) verhindernden Verbindungskörper (6, 9) miteinander verbunden sind, und
- wobei mindestens einem Verbindungskörper (6, 9) die mindestens eine Feder (7, 11) zugeordnet ist,
**dadurch gekennzeichnet, daß**
der Verbindungskörper (6) mindestens teilweise rohrförmig ist und mindestens im rohrförmigen Teil des Verbindungskörpers die eine Feder (7, 11) liegt.

2. Totgangarme Wandermutter nach Anspruch 1,
**dadurch gekennzeichnet,**
daß der Verbindungskörper als Rohr ausgebildet ist, in dem die mindestens eine Feder untergebracht ist, deren beide Enden sich an den Böden der Sacklöcher (4, 5) abstützen.

3. Totgangarme Wandermutter nach Anspruch 1,
**dadurch gekennzeichnet,**
daß der Verbindungskörper (9) einen einseitig offenen rohrförmigen Teil aufweist, aus dem ein darin geführter Stift (10) vorsteht, wobei zwischen dem Stift und dem Boden des rohrförmigen Teiles die mindestens eine Feder (11) angeordnet ist.

4. Totgangarme Wandermutter nach Anspruch 3,
**dadurch gekennzeichnet,**
daß der Stift (10) gegen Herausfallen in der entspannten Stellung der Feder (11) durch einen im Verbindungskörper (9) vorhandenen Anschlag gesichert ist.

5. Totgangarme Wandermutter nach einem der Ansprüche 1-3,
**dadurch gekennzeichnet,**
daß der Verbindungskörper (6, 9) außen mindestens eine zusätzliche den Mutterkörper (2) und den Hilfsmutterkörper (3) voneinanderspannende Feder trägt.

## Claims

1. Low-backlash travelling nut of a screw gear with a threaded spindle (1) and with a nut body (2) provided for the gear connection as well as an auxiliary nut body (3) which is coupled to the nut body so as to be non-rotatable and is longitudinally movable in the longitudinal direction of the threaded spindle (1),
- wherein the nut body (2) and the auxiliary nut body (3) are pretensioned away from one another in the longitudinal direction of the threaded spindle (1) by at least one spring (7, 11) and are supported with their internal threads on the threaded spindle (1),
- wherein the nut body (2) and the auxiliary nut body (3) are provided on their parts which face one another with a plurality of opposing blind holes (4, 5).
- wherein at least two opposing blind holes (4, 5) are connected to one another by a rigid connecting body (6, 9) which is movably guided in at least one of the two opposing blind holes (4, 5) in the longitudinal direction of the threaded spindle (1) and prevents a relative reciprocal torsion between the nut body (2) and the auxiliary nut body (3), and
- wherein at least one spring (7, 11) is associated with at least one connecting body (6, 9),
characterised in that
the connecting body (6) is at least partially tubular and the one spring (7, 11) lies at least in the tubular part of the connecting body.

2. Low-backlash travelling nut according to Claim 1, characterised in that the connecting body is constructed as a tube in which at least one spring is accommodated, both ends of which are supported on the bases of the blind holes (4, 5).

3. Low-backlash travelling nut according to Claim 1, characterised in that the connecting body (9) has a tubular part which is open on one side and out of which projects a pin (10) which is guided therein, at least one spring (11) being disposed between the pin and the base of the tubular part.

4. Low-backlash travelling nut according to Claim 3, characterised in that the pin (10) is secured against falling our in the relaxed state of the pin (11) by a stop provided in the connecting body (9).

5. Low-backlash travelling nut according to one of Claims 1 to 3, characterised in that the connecting body (6, 9) bears on its exterior an additional spring which holds the nut body (2) and the auxiliary nut body (3) away from each other.

## Revendications

1. Ecrou mobile à faible jeu d'une transmission à vis comprenant :
- une broche filetée (1) et un corps d'écrou (2) destiné à être relié à une transmission ainsi qu'un corps d'écrou auxiliaire (3) relié au corps d'écrou de manière fixe en rotation et mobile, dans le sens longitudinal de la broche filetée (1),
- le corps d'écrou (2) et le corps d'écrou auxiliaire (3) étant écartés avec précontrainte dans le sens longitudinal de la broche filetée (1) au moyen d'au moins un ressort (7, 11) et supportés sur la broche filetée (1) par leur filetage intérieur,
- le corps d'écrou (2) et le corps d'écrou auxiliaire (3) comportant sur leurs faces en regard plusieurs trous borgnes l'un en face de l'autre (4, 5),
- au moins deux trous borgnes disposés en face l'un de l'autre (4, 5) étant respectivement reliés par un organe de liaison rigide (6, 9) empêchant une rotation réciproque relative entre le corps d'écrou (2) et le corps d'écrou auxiliaire (3), guidé de manière coulissante dans le sens longitudinal de la broche filetée (1) dans au moins un des deux trous borgnes disposés face l'un à l'autre (4, 5) dans le sens longitudinal de la broche filetée (1), et
- au moins un organe de liaison rigide (6, 9)
caractérisé en ce que
l'organe de liaison (6) est en partie au moins de forme tubulaire et, au moins dans la partie de forme tubulaire, se trouve l'un des ressorts (7, 11).

2. Ecrou à faible jeu selon revendication 1,
caractérisé en ce que
l'organe de liaison est constitué sous forme de tube, dans lequel est logé au moins un ressort dont les deux extrémités s'appuient sur le fond des trous borgnes (4, 5).

3. Ecrou à faible jeu selon revendication 1,
caractérisé en ce que
l'organe de liaison (9) comporte une partie tubulaire ouverte d'un côté de laquelle sort une tige (10) qui y a été introduite, tandis que l'un au moins des ressorts (11) est placé entre la tige et le fond de la partie tubulaire.

4. Ecrou à faible jeu selon revendication 3,
caractérisé en ce que
la tige (10) est assurée contre toute chute par éjection, lorsque le ressort (11) est en position détendue, par l'existence d'une butée dans l'organe de liaison (9).

5. Ecrou à faible jeu selon l'une des revendications 1-3,
caractérisé en ce que
l'organe de liaison (6, 9) porte également à l'extérieur au moins un ressort complémentaire serrant le corps d'écrou (2) et le corps d'écrou auxiliaire (3).
